# FASCICULE DE BREVET EUROPEEN

(11) **EP 1 405 691 B1**
(45) Date de publication et mention de la délivrance du brevet: **25.11.2009**
(21) Numéro de dépôt: 03292434.2
(22) Date de dépôt: 02.10.2003
(51) Int. Cl.: B23Q 1/54, B23Q 39/02, B23Q 37/00

(54) **Tête pivotante multiaxe de machine-outil**
Mehrachsiger Schwenkkopf einer Werkzeugmaschine
Multi-axis rotating head of a machine tool

(30) Priorité: 03.10.2002 FR 0212266
(43) Date de publication de la demande: 07.04.2004
(73) Titulaire: Forest Line Albert, 75017 Paris (FR)
(72) Inventeur: Leseur, Jack, 80300 Mesnil Martinsart (FR); Mouton, Norbert, 80190 Etalon (FR)
(74) Mandataire: Bertrand, Didier

(56) Documents cités:
- EP-A- 0 462 940
- EP-A- 0 885 081
- EP-A- 0 976 498
- EP-A- 1 027 953
- EP-A- 1 055 485
- WO-A-02/36302
- WO-A-97/10071
- DE-A- 1 502 515
- DE-U- 9 218 976
- US-A- 3 135 071
- US-A- 4 552 502
- PATENT ABSTRACTS OF JAPAN vol. 1998, no. 10, 31 août 1998 (1998-08-31) & JP 10 138064 A (NISSAN MOTOR CO LTD), 26 mai 1998 (1998-05-26)

## Description

La présente invention concerne une tête pivotante multiaxe de machine-outil, notamment une machine d'usinage 5 axes.

L'usinage à grande vitesse a conduit les fabricants de machines-outils à faire évoluer la conception des commandes d'axe et, dans le domaine de l'usinage 5 axes, on a déjà proposé d'utiliser des moteurs couples, lesquels ont des performances intéressantes : vitesses élevées, par exemple de 50 à 100 tr/min, des accélérations élevées, une dynamique élevée, pas d'usure, simplicité de l'intégration, etc.

On connaît par le document EP 0 885 081 une tête pivotante multiaxe de machine-outil, comportant un bloc-fourche monté pivotant autour d'un premier axe, un arbre-support monté tournant autour d'un second axe dans le bloc-fourche, des premiers moyens d'entraînement en rotation du bloc-fourche autour dudit premier axe, des seconds moyens d'entraînement en rotation dudit arbre-support autour dudit second axe, et une broche montée sur ledit arbre-support et d'axe orthogonal audit second axe. Les deux moyens d'entraînement rotatif sont des moteurs-couples d'entraînement direct. La broche montée sur l'arbre-support rotatif peut être montée sur cet arbre-support en rotation autour d'un troisième axe orthogonal aux deux premiers axes. La broche est centrée : son axe passe par le second axe ou à proximité de celui-ci. On pourra aussi se référer aux documents US 4 552 505 et US 5 257 883.

Quoique cette solution soit souvent satisfaisante, il existe des cas où il n'est pas facile d'accéder à certaines pièces.

On connaît dans le domaine des machines destinées à l'usinage des meubles, notamment par les documents WO 02 36 302, considéré comme le document d'art antérieur le plus proche, et EP 0462 940, des machines dont la tête porte plusieurs broches. Selon le premier document, les trois ou quatre broches sont concourantes, à l'exception éventuelle d'une des broches qui peut être déportée par rapport à l'axe de rotation de l'arbre-support. Selon le second document, on a une tête à deux broches qui peuvent être montées asymétriquement, l'une étant alors parallèle à l'axe de l'arbre-support. Ces solutions ne sont pas transposables aux machines-outils industrielles destinées à l'usinage des métaux, qui constituent l'application préférée des machines-outils visées par la présente invention.

Le but de l'invention est de proposer une tête de machine-outil pivotante qui ne présente pas les inconvénients et permette un accès plus facile à un certain type de pièces à usiner.

L'invention atteint son but grâce à une tête pivotante multiaxe de machine-outil conforme à la revendication 1 annexée. Ce décalage de chaque broche par rapport au support et donc à la tête permet à l'outil de travailler plus près de certaines surfaces et un usinage contre paroi difficile autrement, tout en augmentant le volume usinable (course du support + deux fois le décalage de broche). Mais surtout, le montage diamétralement opposé des deux parties d'entraînement d'outil des broches assure une bonne protection de la broche inactive vis-à-vis de la pollution générée par la broche en usinage. De plus, cette disposition permet d'une part le montage des systèmes automatiques de blocage/déblocage d'outil, des collecteurs d'arrosage par le centre outil, dans l'axe à l'arrière des broches et d'autre part, le même encombrement de porte-broche pour les deux broches ce qui limite les risques de collision en usinage à grande vitesse.

Les deux broches, qui ont avantageusement leurs axes situés dans des plans sensiblement parallèles, perpendiculaires audit second axe B, -sont de préférence centrées dans un même plan transversal de l'arbre-support.

D'autres avantages et caractéristiques seront mis en évidence à la lecture de la description qui suit, en référence aux figures annexées suivantes :
La figure 1 représente schématiquement de côté une tête bibroche conforme à l'invention,
Les figures 2 et 3 sont deux vues schématiques en perspective montrant la tête bibroche dans deux positions de broches,
La figure 4 est une coupe longitudinale de la tête, selon le plan IV-IV de la figure 5
La figure 5 est une coupe longitudinale de la tête, selon le plan V-V de la figure 4, orthogonal au plan IV-IV.

Les figures montrent la tête bibroche 1 de l'invention destinée à être accrochée à la base d'un support horizontal ou vertical 10 d'une machine à portique (fixe ou mobile) ou à montant, par exemple à l'aide d'un dispositif d'accrochage de type dit "pick-up".

La tête 1 comporte un bloc 2 mobile en rotation autour de l'axe vertical C grâce à un moteur-couple d'entraînement direct 3, auquel sont associés des moyens 4 de blocage hydraulique de l'axe C et une couronne 5 d'orientation avec mesure intégrée ou coopérant avec des capteurs de position 6.

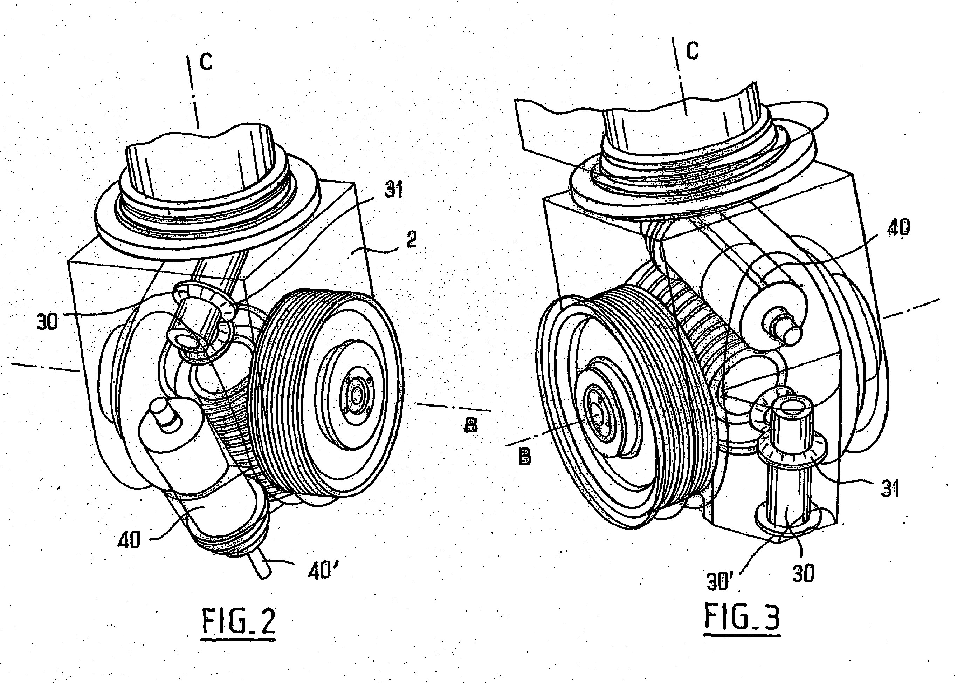

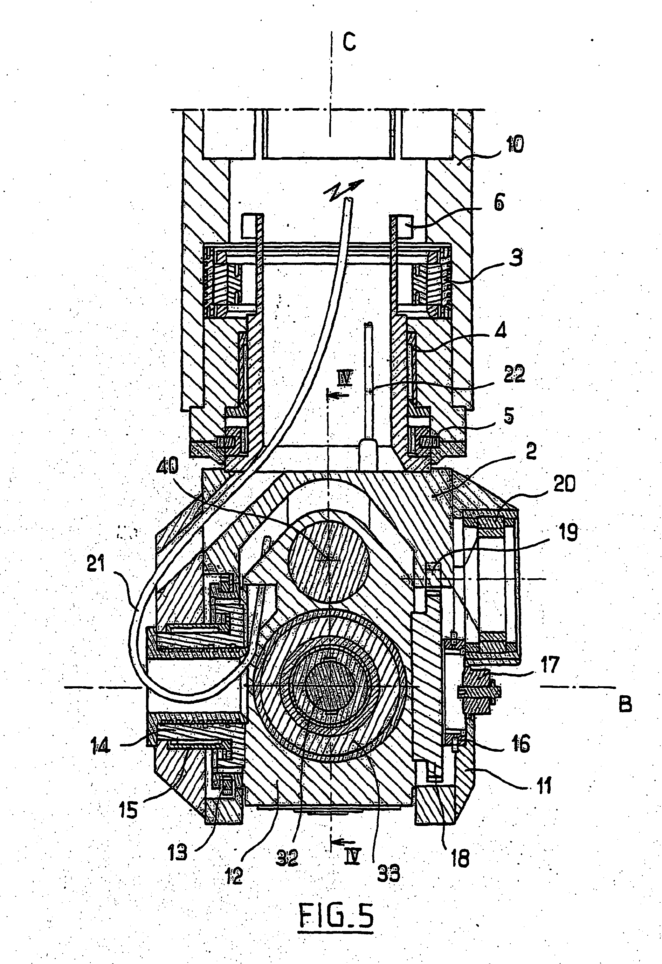

Le bloc-fourche 2 forme une chape 11 dans laquelle est monté en rotation un arbre-support 12 de broche, autour de l'axe B orthogonal à C. L'arbre-support 12 tourne d'une part grâce à un tourillon 14 coopérant avec une couronne d'orientation 13 avec mesure intégrée et un dispositif de blocage hydraulique 15 de l'axe B et d'autre part grâce à un pivot à roulement 16, la mesure de position étant assurée par un capteur rotatif 17 ou par mesure intégrée de la couronne 13. Quoique l'invention pourrait s'appliquer à une tête à moteur d'entraînement direct sur l'axe B tel que représenté très schématiquement sur les figures 2 et 3, elle s'applique de préférence à une tête à entraînement semi-directe tel que représenté sur la figure 5 : le support 12 est entraîné en rotation sur l'axe B de manière semi-directe grâce à une roue dentée 18 équipée d'un dispositif de précharge et engrenant avec un pignon 19 porté par la sortie d'un moteur de commande 20 excentré disposé sur un côté du bloc 2 et alimenté électriquement par des connexions électriques 21 qui remontent à travers le support 10. De même l'intérieur du support 10 laisse passer des connexions hydrauliques, pneumatiques 22 et électriques. Dans cette disposition, les axes B et C sont à débattement limité ; l'adjonction d'un ensemble de collecteurs hydraulique et électrique (connu en soi et non représenté) permet la rotation sans limitation de l'axe C

L'arbre-support 12 porte deux broches orientées à 90°, d'une part une broche mécanique de puissance 30 et d'autre part une électrobroche de finition 40. La tête de la broche 30 est entraînée au travers d'une transmission spiroconique 31 par un arbre rotor 32 coopérant avec un stator 33 de moteur synchrone. Le rotor 32 tourne dans des roulements 34 et coopère avec un capteur 35. L'électrobroche de finition 40 comporte son moteur électrique intégré, alimenté, comme le moteur synchrone 32, 33 au travers des connexions 21.

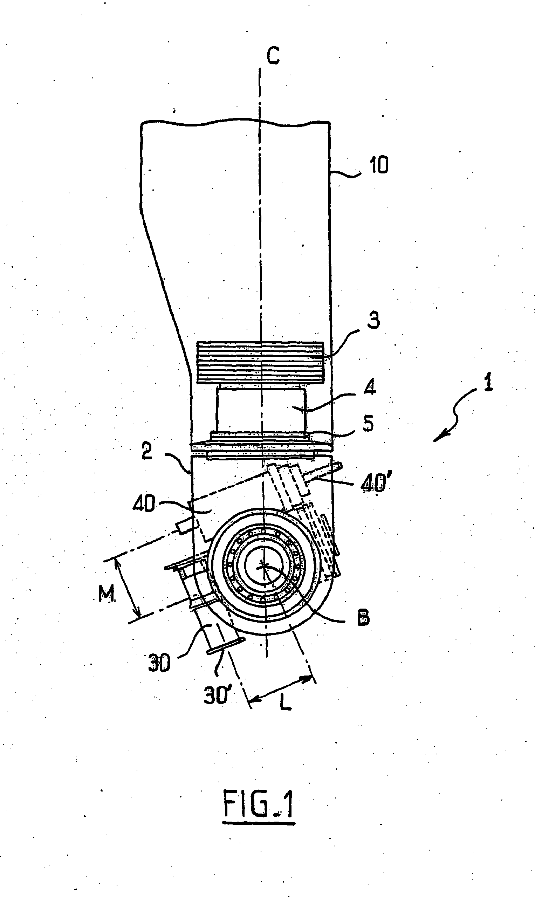

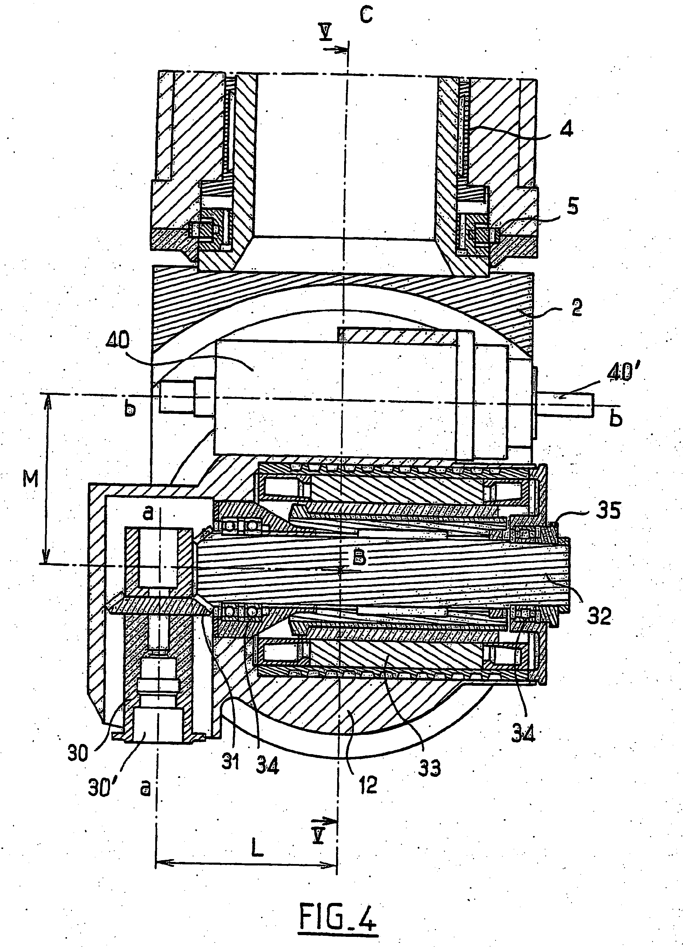

Comme on le voit sur les figures 1 et 4, les axes aa et bb des broches 30 et 40 sont éloignés d'une distance respective L et M de l'axe de rotation B de l'arbre-support 12. Ces distances L et M sont sensiblement égales. Les deux broches qui par ailleurs sont centrées dans le même plan médian de l'arbre-support 12 passant par l'axe C, ont sensiblement le même encombrement, limitant ainsi les risques d'interférence pièce-tête d'usinage, entre les phases d'ébauche et de finition. Elles sont situées par exemple en quadrature inversée l'une par rapport à l'autre ce qui permet de changer rapidement de process d'usinage ébauche finition. Les parties d'entraînement d'outils, respectivement 30' pour la broche 30, et 40' pour la broche 40, sont diamétralement opposées par rapport à l'axe B, comme on le voit notamment sur les figures 1 et 4. Quand la tête se trouve dans l'une ou l'autre des positions de travail représentées sur les figures 2 et 3, la partie d'entraînement d'outil de la broche non travaillante est protégée au mieux des salissures formées par la broche travaillante puisqu'elle en est diamétralement éloignée.

## Revendications

1. Tête pivotante multiaxe de machine-outil, du type comportant un bloc-fourche (2) monté pivotant autour d'un premier axe C, un arbre-support (12) monté tournant autour d'un second axe B dans le bloc-fourche (2), des premiers moyens (3) d'entraînement en rotation du bloc-fourche (2) autour dudit premier axe C, des seconds moyens d'entraînement (18-20) en rotation dudit arbre-support (12) autour dudit second axe B, et deux broches (30, 40) montées à des positions angulaires différentes sur ledit arbre-support (12) et l'une des broches étant déportée de sorte que son axe (aa, bb) soit orthogonal audit second axe B, **caractérisée en ce qu'**il s'agit d'une tête de machine-outil d'usinage des métaux comportant une broche de puissance (30) et une broche de finition (40), **en ce que** les deux broches (30,40) sont montées déportées sur l'arbre-support (12) de sorte que leur axe (aa, bb) soit éloigné dudit second axe B et orthogonal à celui-ci, les deux broches ayant leurs parties d'entraînement d'outil sensiblement diamétralement opposées par rapport audit second axe (B), la broche de puissance (30) étant une broche entraînée au travers d'une transmission angulaire (31) par un arbre rotor (32) d'un moteur synchrone (32, 33) logé dans ledit arbre-support tournant (12), perpendiculairement audit second axe B et la broche de finition (40) étant une électrobroche.

2. Tête selon la revendication 1, **caractérisée en ce que** les axes (aa, bb) des deux broches sont situés dans des plans sensiblement parallèles, perpendiculaires audit second axe (B).

3. Tête selon la revendication 2, **caractérisée en ce que** les deux broches (30, 40) sont centrées sensiblement dans un même plan transversal de l'arbre-support (12).

## Claims

1. Multi-axis swivel head for a machine tool, of the type comprising a fork mounting (2) swivellingly mounted about a first axis C, a support shaft (12) rotatingly mounted about a second axis B within the fork mounting (2), first means (3) to rotatingly drive the fork mounting (2) about said first axis C, second driving means (18-20) to rotate said support shaft (12) about said second axis B, and two spindles (30, 40) mounted at different angular positions on said support shaft (12), **characterized in that** it is a machine tool head for machining metals comprising a power spindle (30) and a finishing spindle (40), **in that** the two spindles (30, 40) are offset mounted on the support shaft (12) so that their axis (aa, bb) is apart from said second axis B and orthogonal to this one, the two spindles having their tool driving parts substantially diametrically opposed relative to said second axis (B), the power spindle (30) being a spindle driven through an angular transmission (31) by a shaft rotor (32) of a synchronous motor (32, 33) received within said rotating support shaft (12), perpendicularly to said second axis B and the finishing spindle (40) being an electro-spindle.

2. Machining head according to claim 1 **characterized in that** the axes (aa, bb) of the two spindles are located into substantially parallel planes, perpendicular to said second axis (B).

3. Machining head according to claim 2, **characterized in that** the two spindles (30, 40) are substantially centered into the same transversal plane of the support shaft (12).

## Patentansprüche

1. Mehrachsiger Werkzeugmaschinen-Schwenkkopf des Typs, der einen um eine erste Achse C schwenkbar angebrachten Gabelblock (2), einen um eine zweite Achse B im Gabelblock (2) drehbar angebrachte Trägerwelle (12), erste Mittel (3) zum rotatorischen Antreiben des Gabelblocks (2) um die erste Achse C, zweite Mittel (18-20) zum rotatorischen Antreiben der Trägerwelle (12) um die zweite Achse B und zwei Stifte (30, 40), die an der Trägerwelle (12) an verschiedenen Winkelpositionen angebracht sind, umfasst, **dadurch gekennzeichnet, dass** es sich um einen Werkzeugmaschinenkopf zur Bearbeitung von Metallen handelt, der einen Leistungsstift (30) und einen Endbearbeitungsstift (40) enthält, dass die zwei Stifte (30, 40) an der Trägerwelle (12) versetzt angebracht sind, derart, dass ihre Achse (aa, bb) von der zweiten Achse B beabstandet und zu dieser senkrecht ist, wobei die Werkzeugantriebsteile der zwei Stifte in Bezug auf die zweite Achse B im Wesentlichen diametral entgegengesetzt sind, wobei der Leistungsstift (30) ein Stift ist, der über eine Winkelübertragung (31) durch eine Rotorwelle (32) eines Synchronmotors (32, 33) angetrieben wird, der in der drehenden Trägerwelle (12) senkrecht zu der zweiten Achse B untergebracht ist, und wobei der Endbearbeitungsstift (40) ein Elektrostift ist.

2. Kopf nach Anspruch 1, **dadurch gekennzeichnet, dass** die Achsen (aa, bb) der zwei Stifte in Ebenen liegen, die im Wesentlichen zueinander parallel und zu der zweiten Achse B senkrecht sind.

3. Kopf nach Anspruch 2, **dadurch gekennzeichnet, dass** die zwei Stifte (30, 40) im Wesentlichen in derselben transversalen Ebene der Trägerwelle (12) zentriert sind.
